# EUROPÄISCHE PATENTSCHRIFT

(11) **EP 1 853 969 B1**
(45) Veröffentlichungstag und Bekanntmachung des Hinweises auf die Patenterteilung: **15.09.2010**
(21) Anmeldenummer: 06723202.5
(22) Anmeldetag: 03.03.2006
(51) Int. Cl.: G03B 21/62, G03B 21/56

(54) **KONTRASTERHÖHENDER RÜCKPROJEKTIONSSCHIRM**
CONTRAST-INCREASING REAR PROJECTION SCREEN
ECRAN DE RETROPROJECTION AUGMENTANT LE CONTRASTE

(30) Priorität: 04.03.2005 DE 102005010523
(43) Veröffentlichungstag der Anmeldung: 14.11.2007
(73) Patentinhaber: Fraunhofer-Gesellschaft zur Förderung der angewandten Forschung e.V., 80686 München (DE)
(72) Erfinder: VERGÖHL, Michael, 38162 Cremlingen-Destedt (DE); NEUMANN, Frank, 38100 Braunschweig (DE); RICKERS, Christoph, 38124 Braunschweig (DE)
(74) Vertreter: Maxton Langmaack & Partner
(86) Internationale Anmeldenummer: PCT/EP2006/001958
(87) Internationale Veröffentlichungsnummer: WO 2006/092319

(56) Entgegenhaltungen:
- EP-A- 0 276 459
- WO-A-98/09153
- US-B1- 6 529 322

## Beschreibung

Die vorliegende Erfindung betrifft eine Rückprojektionsvorrichtung sowie einen Rückprojektionsschirm und ein zugehöriges Verfahren zur Darstellung statischer und/oder bewegter Bilder.

Vorrichtungen und Verfahren zur insbesondere großflächigen Auf- bzw. Rückprojektion zur Darstellung von statischen und/oder beweglichen Bildern sind vielfach bekannt. Die US-Patentschrift US 6,769,744 B2 beschreibt ein Projektionsverfahren und eine entsprechende Projektionsvorrichtung für Auf oder/und Rückprojektion unter Verwendung eines spektral selektiv absorbierenden oder reflektierenden Projektionsschirmes. Absorption und Reflexion werden dort mittels Polymermaterialien bzw. Farbstoffen sowie dielektrischen Schichten eingestellt.

Aufgabe der vorliegenden Erfindung ist es, eine Darstellung statischer oder bewegter Bilder auf einer Bildfläche insbesondere bei Umgebungslicht wie beispielsweise Tageslicht oder künstlicher Raumbeleuchtung zu verbessern.

Diese Aufgabe wird durch eine Rückprojektionsvorrichtung nach Anspruch 1, einen Projektionsschirm nach Anspruch 20, ein Rückprojektionsverfahren nach Anspruch 21, ein Verfahren zur Herstellung eines Projektionsschirmes nach Anspruch 24 sowie durch eine Verwendung einer Rückprojektionsvorrichtung nach Anspruch 31 gelöst. Vorteilhafte Ausgestaltungen und Weiterbildungen sind in den jeweiligen abhängigen Ansprüchen angegeben.

Eine erfindungsgemäße Rückprojektionsvorrichtung zur Darstellung zumindest statischer Bilder umfasst wenigstens einen Projektionsschirm und wenigstens eine Lichtquelle mit einem Emissionsspektralbereich, die zu einer Rückprojektion auf den zumindest außerhalb wenigstens eines spektral schmalbandigen Transmissionsspektralbereiches spektral selektiv absorbierend für ein Umgebungslicht eingestellten Projektionsschirm vorgesehen ist, welcher in zumindest einem für das menschliche Auge sichtbaren Lichtspektralbereich absorbierende absorbierende metallische Nanopartikel umfasst, wobei der Projektionsschirm eine Transmission von Nutzlicht innerhalb des Transmissionsspektralbereiches erlaubt.

Für die in zumindest einem für das menschliche Auge sichtbaren Lichtspektralbereich zumindest außerhalb des Transmissionsspektralbereiches absorbierenden metallischen Nanopartikel werden als Metalle bevorzugt Gold oder Silber verwendet, andere Metalle können jedoch auch verwendet werden.

Der Projektionsschirm ist dabei beispielsweise als Flächengebilde ausgestaltet. Bevorzugt ist der Projektionsschirm ein ebenes Flächengebilde. Insbesondere in Verbindung mit einer Laserprojektionsvorrichtung kann der Projektionsschirm jedoch auch eine wenigstens einfach gekrümmte Oberfläche aufweisen. Ein Grundriss eines in etwa ebenen Projektionsschirmes ist beispielweise rechteckig, polygonal, oval, rund oder allgemein unregelmäßig ausgestaltet. Insbesondere kann eine Projektionsvorrichtung mehrere Projektionsschirme, die beispielsweise nebeneinander angeordnet sind, umfassen. Bevorzugt umfasst der Projektionsschirm ein insbesondere transparentes Substratmaterial. Besonders bevorzugt weist das Substratmaterial Glas oder Kunststoff auf. Beispielsweise wird als Substrat eine Kunststofffolie verwendet.

Die Lichtquelle ist insbesondere so ausgestaltet, dass der Projektionsschirm örtlich selektiv und vorzugsweise zeitlich veränderlich beleuchtet werden kann. In einer ersten Variante wird beispielsweise ein Bild mit Hilfe einer Projektionsvorrichtung auf dem Projektionsschirm abgebildet. Dazu können insbesondere Projektionsvorrichtungen wie sie beispielsweise für eine Videoprojektion oder dergleichen bekannt sind, insbesondere unter Verwendung einer Lichtventil- oder Mikrospiegeltechnologie verwendet werden. In einer anderen Variante wird beispielsweise das Bild mit Hilfe wenigstens eines Laserstrahls auf dem Projektionsschirm erzeugt. Vorzugsweise ermöglicht dies eine verzerrungsfreie Darstellung auf nicht-ebenen Flächen. Insbesondere ermöglicht die Projektionsvorrichtung eine Darstellung bewegter Bilder mit einer Bildfrequenz von wenigstens 50Hz sowie bevorzugt wenigstens 100Hz.

Bei dem Umgebungslicht handelt es sich beispielsweise um natürliches Tageslicht oder/und um insbesondere zur Beleuchtung eines Raumes vorgesehenes Kunstlicht. Der Spektralbereich des Umgebungslichtes kann somit den gesamten für das menschliche Auge sichtbaren Spektralbereich des Lichtes umfassen.

Der Nutzlichtspektralbereich umfasst vorzugsweise wenigstens einen schmalbandigen Teilbereich des für das menschliche Auge sichtbaren Lichtspektrums. Gleichermaßen umfasst der Transmissionsspektralbereich ebenfalls wenigstens einen schmalbandigen Teilbereich des für das menschliche Auge sichtbaren Lichtspektrums. Ein schmalbandiger Teilbereich weist gemäß einer Ausgestaltung eine Bandbreite zwischen 100 nm und 50 nm, bevorzugt zwischen 50 nm und 20 nm, besonders bevorzugt zwischen 20 nm und 5 nm sowie ganz besonders bevorzugt von weniger als 5 nm auf. Die Bandbreite wird beispielsweise anhand der entsprechenden Halbwertsbreite definiert. Der Transmissionsspektralbereich gibt insbesondere den für eine Bilderzeugung nutzbaren Lichtspektralbereich an. Der tatsächlich für die Bildgebung verwendete Nutzlichtspektralbereich kann dabei auch lediglich eine echte Teilmenge dieses Spektralbereiches sein. Dies ist beispielsweise durch eine Wahl des Emissionsspektralbereiches der Lichtquelle bedingt.

Vorzugsweise ist ein Grad der Absorption von Umgebungslicht durch den Projektionsschirm zumindest außerhalb eines Nutzlichtspektralbereiches größer als 65%, weiter bevorzugt größer als 80%, besonders bevorzugt größer als 90% und ganz besonders bevorzugt größer als 95%, bezogen auf eine Intensität des einfallenden Umgebungslichtes auf den Projektionsschirm unter einem senkrechten Einfall. Vorzugsweise wird der Absorptionsgrad auch unter Zugrundelegung einer Mittelung über einen Einfallswinkelbereich eingehalten. In einer ersten Variante ist die Absorption so bemessen, dass diese angegebenen Werte im Falle einer spektral integrierten Intensität des Umgebungslichtes erfüllt sind. Insbesondere kann eine Absorption in einem Spektralbereich, in dem das menschliche Auge eine geringe Empfindlichkeit aufweist, geringer sein als ein einem Spektralbereich mit hoher Augenempfindlichkeit. Des weiteren kann es zweckmäßig sein, für einen möglichst guten Kompromiss zwischen Transmission von Nutzlicht und Absorption von Umgebungslicht eine spektral variierende Absorption außerhalb des Transmissionsspektralbereiches zuzulassen. In einer weiteren Variante werden die angegebenen Absorptionswerte für jede Wellenlänge des Umgebungslichtspektralbereiches zumindest außerhalb des Transmissionsspektralbereiches erfüllt. Besonders vorteilhaft wird eine Remission von Umgebungslicht unterdrückt bzw. zumindest minimiert. Weiter bevorzugt erscheint die Leinwand für einen Betrachter ohne Rückprojektion im Wesentlichen dunkel. Dabei kann die Leinwand einen dunklen Farbeindruck wie beispielsweise dunkelviolett erzeugen. Besonders bevorzugt ist die Absorption jedoch so eingestellt, dass die Leinwand grau oder schwarz und somit unbunt erscheint.

Die Größe der metallischen Nanopartikel ist vorzugsweise so bemessen, dass sie in dem betrachteten Lichtspektralbereich Oberflächenplasmonen ausbilden. Weiter bevorzugt zeigen die metallischen Nanopartikel im jeweils betrachteten Spektralbereich eine spektral schmalbandige Absorption. Eine Bandbreite des absorbierenden Spektralbereiches ist bevorzugt zwischen 100 nm und 50 nm, weiter bevorzugt zwischen 50 nm und 20 nm sowie besonders bevorzugt kleiner als 20. Die spektrale Bandbreite ist insbesondere durch die entsprechende Halbwertsbreite definiert. Besonders bevorzugt kann durch eine enge mittlere Größenverteilung metallischer Nanopartikel ein Absorptionsspektralbereich ausgewählt werden. Eine enge mittleren Größenverteilung weist beispielsweise eine Standardabweichung der Größe zwischen 10% und 3%, insbesondere von weniger als 3% auf. Beispielsweise können durch wenigstens zwei verschiedene enge mittlere Gröβenverteilungen wenigstens zwei verschiedene schmalbandige Spektralbereiche, in denen eine Absorption stattfindet, bereitgestellt werden.

Dabei ist es besonders zweckmäßig, wenn die metallischen Nanopartikel einen mittleren Durchmesser zwischen 100 nm und 200 nm, bevorzugt zwischen 60 nm und 100 nm sowie besonders bevorzugt zwischen 5 und 60 nm aufweisen. Der mittlere Durchmesser ist dabei insbesondere als mittlere laterale Ausdehnung zu verstehen, wobei metallische Nanopartikel vorzugsweise in etwa kugelförmig, in etwa ellipsoid oder/und in etwa plättchenförmig ausgebildet sind. Vorzugsweise kann durch eine entsprechende Größenverteilung metallischer Nanopartikel eine Superposition von spektral schmalbandigen Absorptionsbereichen erzielt werden. Besonders bevorzugt wird damit zumindest ein absorbierender Spektralbereich jeweils zwischen zwei Grundfarben des Nutzlichtes bereitgestellt.

Insbesondere bei der Verwendung polarisierten Nutzlichtes ist es vorteilhaft, wenn die metallischen Nanopartikel jeweils eine anisotrope Form aufweisen und in einer Vorzugsrichtung relativ zum Projektionsschirm ausgerichtet sind. Beispielsweise weisen die metallischen Nanopartikel dazu eine Nadel- und/oder Plättchenform auf. Bevorzugt absorbieren diese Nanopartikel unterschiedliche Polarisationsrichtungen des Nutzlichtes sowie des Umgebungslichtes unterschiedlich stark. Weiter bevorzugt sind die anisotropen Nanopartikel so ausgerichtet, dass eine Polarisationsrichtung des Nutzlichtes weniger stark beeinflusst wird, wohingegen das im allgemeinen isotrop polarisierte bzw. unpolarisierte Umgebungslicht nahezu gleichmäßig absorbiert wird. Beispielsweise sind ellipsoide Nanopartikel mit einer Längsachse in einer Ebene des Projektionsschirmes jeweils längs zu einer Polarisationsrichtung eines elektrischen Feldvektors eines auf den Projektionsschirm einfallenden linear polarisierten Nutzlichtstahles ausgerichtet. Eine Absorption aufgrund von Oberflächenplasmonen erfolgt dabei beispielsweise im Bereich einer ersten Wellenlänge. Vorzugsweise wird ein Lichtstrahl mit einer quer zur Längsachse eingestellten Polarisation jedoch im Bereich einer zweiten, von der ersten verschiedenen Wellenlänge absorbiert. Besonders bevorzugt wird eine erhöhter Kontrast zwischen dem transmittierten Nutzlicht und dem von der Oberfläche des Projektionsschirmes remittierten Umgebungslichtes erzielt. Des Weiteren wird insbesondere eine winkelabhängige Absorption insbesondere des Umgebungslichtes eingestellt. Beispielsweise kann so Umgebungslicht, welches aus Richtungen kommt, in die das Nutzlicht nicht transmittiert werden muss, stärker als Licht aus übrigen Richtungen absorbiert werden.

In einer bevorzugten Ausgestaltung liegt der Emissionsspektralbereich der Lichtquelle zumindest teilweise innerhalb des Transmissionsspektralbereiches. Dieser wird insbesondere der durch wenigstens einen spektral schmalbandigen Teilbereich des für das menschliche Auge sichtbaren Lichtspektrums gebildet ist. Der für die Bildgebung verwendete Nutzlichtspektralbereich kann als Schnittmenge von Emissions- und Transmissionsspektralbereich verstanden werden. In einer ersten Variante wird beispielsweise der Transmissionsspektralbereich durch den Emissionsspektralbereich der Lichtquelle spektral überschritten. Somit wird nur ein Teil des Emissionsspektralbereiches vom Projektionsschirm transmittiert. In einer weiteren Variante ist ein Emissionsspektralbereich der Lichtquelle beispielsweise schmalbandiger als der schmalbandige Nutzlichtspektralbereich. Dies wird beispielsweise durch Verwendung wenigstens eines monochromatischen Lasers erzielt, der vorzugsweise eine Bandbreite von weniger als 1 nm aufweist. Dergleichen kann dies auch bei Verwendung einer LED der Fall sein, die beispielsweise eine spektrale Bandbreite von etwa 30 nm aufweist. Transmissions- und Emissionsspektralbereich sind vorzugsweise so aufeinander abgestimmt, dass der Nutzlichtspektralbereich zumindest annähernd dem Transmissionsspektralbereich entspricht. Eine Bandbreite des schmalbandigen Teilbereiches des Nutzlichtes beträgt bevorzugt zwischen 100 nm und 50 nm, weiter bevorzugt zwischen 50 nm und 20 nm sowie besonders bevorzugt weniger als 20 nm. Die Bandbreite der Spektralbereiche bezieht sich hierbei jeweils auf eine Halbwertsbreite.

In einer ersten Variante kann unter Verwendung eines einzigen spektral schmalbandigen Teilbereiches des Nutzlichtes ein monochromatisches Bild erzeugt werden.

Insbesondere zur Erzeugung farbiger Bilder ist vorgesehen, dass der Nutzlichtspektralbereich durch wenigstens drei schmalbandige, insbesondere disjunkte, Teilbereiche des für das menschliche Auge sichtbaren Lichtspektrums gebildet ist. Die drei schmalbandigen Teilbereich liegen dabei insbesondere jeweils im Bereich einer Grundfarbe. Eine Grundfarbe ist dabei insbesondere eine der drei ausführungsbedingten Grundfarben eines abzubildenden Farbraumes. Die Grundfarben sind beispielsweise rot, grün und blau, mit denen insbesondere ein weißer bzw. unbunter Farbton additiv gemischt werden kann. Es können jedoch auch andere Grundfarben verwendet werden. Bezüglich einer Definition einer Grundfarbe sowie zur additiven Farbmischung und Farbmetrik wird an dieser Stelle auf die Monographie "Manfred Richter, Einführung in die Farbmetrik, 1981, Berlin, De Gruyter" verwiesen, auf die im Rahmen der Offenbarung Bezug genommen wird. Ein beispielhaftes Tripel spektral reiner Grundfarben ist 447 nm (blau), 532 nm (grün) und 627 nm (rot). Ein weiteres beispielhaftes Tripel von Grundfarben ist 445 nm (blau), 546 nm (grün) und 632 nm (rot). Daneben können auch andere Werte verwendet werden, wobei die Grundfarben vorzugsweise jeweils in etwa zwischen 420 nm und 460 nm, zwischen 520 nm und 560 nm sowie zwischen 600 und 640 nm liegen. Ebenso können auch spektral nicht reine Grundfarben verwendet werden, indem Spektralbereiche mit einer endlichen Halbwertsbreite verwendet werden. Die Halbwertsbreite beträgt bevorzugt zwischen 100 nm und 50 nm, was beispielsweise mit einem Farbfilter in Verbindung mit einer spektral breitbandigen Lichtquelle erzielt werden kann. Weiter bevorzugt beträgt sie zwischen 50 nm und 20 nm sowie besonders bevorzugt zwischen 20 nm und 5 nm, was mit LED bzw. Laserbeleuchtung erzielt werden kann. Ganz besonders bevorzugt beträgt sie weniger als 5 nm, was mit einem Laser erzielt werden kann. Des Weiteren können auch mehr als drei Grundfarben verwendet werden. Insbesondere bei Verwendung von monochromatischen Grundfarben, die beispielsweise durch jeweils einen Laser bereitgestellt werden können, kann ein großer Farbraum mit farbreinen Grundfarben abgedeckt werden.

Besonders bevorzugt ist als Lichtquelle wenigstens ein Laser oder/und eine Leuchtdiode (LED), insbesondere im Spektralbereich einer Grundfarbe, vorgesehen. In einer weiteren Ausgestaltung wird als Lichtquelle eine breitbandige Lichtquelle in Verbindung mit einer Spektralbereichszerlegung, insbesondere zur Bereitstellung wenigstens eines Spektralbereiches einer Grundfarbe, vorgesehen. Als breitbandige Lichtquelle kann beispielsweise eine Halogenlampe, eine Gasentladungslampe oder dergleichen verwendet werden. Zur Spektralbereichszerlegung wird insbesondere wenigstens ein Farbfilterelement verwendet. Bevorzugt wird eine Spektralbereichszerlegung mit Hilfe wenigstens eines Farbrades ermöglicht. Ein beispielhafter Aufbau wie auch Funktion eines Farbrades geht aus der DE 197 08 949 A1 hervor, auf die hiermit im Rahmen dieser Offenbarung verwiesen wird.

Besonders zweckmäßig umfasst der Emissionsspektralbereich der Lichtquelle Spektralbereiche wenigstens dreier Grundfarben.

Bevorzugt ist vorgesehen, dass der Projektionsschirm wenigstens einen in zumindest einem für das menschliche Auge sichtbaren Lichtspektralbereich zumindest außerhalb des Transmissionsspektralbereiches absorbierenden Farbstoff und/oder Farbpigmente und/oder ein anorganisches Material umfasst. Insbesondere ist eine Farbstoff- und/oder eine Farbpigmentmischung vorgesehen. Des weiteren wird als anorganisches Material beispielsweise ein Metalloxid-, -nitrid oder -carbid verwendet. Insbesondere kann durch Verwendung verschiedener vorgenannter absorbierender Stoffe vorzugsweise der gesamte Umgebungslichtspektralbereich außerhalb des Transmissionsspektralbereiches und insbesondere des Nutzlichtspektralbereiches absorbiert werden.

Insbesondere bei einer Verwendung dreier Grundfarben bei 447 nm, 532 nm und 629 nm ist vorgesehen, dass der Projektionsschirm zumindest in einem ersten Spektralbereich zwischen 447 nm und 532 nm und in einem zweiten Spektralbereich zwischen 532 nm und 629 nm sowie insbesondere im ultravioletten Spektralbereich und/oder im infraroten Spektralbereich absorbiert. Eine Absorption im ersten Spektralbereich zwischen 447 nm und 532 nm wird beispielweise mit Pyrromethen 546 erzielt. Alternativ wird eine Blockung in diesem Spektralbereich mit dem Farbstoff DOCI (3,3'-Diethyloxacarbocyanine lodide) erzielt. Eine Absorption im zweiten Spektralbereich zwischen 532 und 629 nm wird beispielsweise mit dem Farbstoff DODCI (3,3'-Diethyloxadicarbocyanine lodide) oder alternativ mit dem Farbstoff DQOCI (1,3'-Diethyl-4,2'-quinolyloxacarbocyanine lodide) erzielt. Eine Absorption im ultravioletten Spektralbereich wird insbesondere mit Coumarin 102 bereitgestellt. Im infraroten Spektralbereich wird für eine Absorption beispielsweise der Farbstoff Cryptocyanine verwendet. Die genannten Farbstoffe können als Laserfarbstoffe beispielsweise von der Lambda Physik AG, Hans-Böckler-Straße 12, D-37079 in Deutschland bezogen werden. Neben den vorgenannten Farbstoffen können weitere Laserfarbstoffe insbesondere in einer Kombination verwendet werden. Beispielsweise werden mit anderen Laserfarbstoffen andere absorbierende Spektralbereiche eingestellt. Bezüglich der genannten und weiterer Laserfarbstoffe wird im Rahmen der Offenbarung auf den Katalog "Lambdachrome^{®} Laser Dyes", 3rd Edition (2000), Ulrich Brackmann, Lambda Physik AG, Hans-Böckler-Straße 12, D-37079 Göttingen, Deutschland, verwiesen. Bevorzugt sind Farbstoffe in Form einer dünnen Schicht oder in Schichtstapeln auf der dem Betrachter zu- oder abgewandten Seite der Projektionsfläche des Projektionsschirmes aufgebracht. Ebenso können diese auf beiden Seiten vorgesehen sein. Die Konzentration und/oder die Schichtdicke ist dabei so bemessen, dass vorzugsweise die eingangs genannten Absorptionsgrade erzielt werden. Für die jeweiligen Grenzen der Spektralbereiche wird vorzugsweise eine Zehnprozent-Breite, d.h. Wellenlängenwerte herangezogen, an denen die zugehörige Absorption auf 10% eines Scheitelwertes der entsprechenden Absorptionscharakteristik abgesunken ist. Insbesondere zusätzlich zu Farbstoffen werden metallische Nanopartikel verwendet.

In einer ersten Variante sind die metallischen Nanopartikel auf einer Oberfläche des Projektionsschirmes aufgebracht. In einer zweiten Variante ist vorgesehen, dass der Projektionsschirm eine Matrix zur Einbettung wenigstens eines in zumindest einem für das menschliche Auge sichtbaren Lichtspektralbereich insbesondere außerhalb des Nutzlichtspektralbereiches absorbierenden Stoffes und/oder eines Farbstoffes und/oder metallischer Nanopartikel umfasst. Beispielsweise handelt es sich dabei um eine polymere oder anorganische Matrix. Als anorganische Matrix wird beispielsweise ein Metalloxid, ein Metallnitrid, ein Metalloxinitrid oder ein Metallkarbid verwendet. Insbesondere zur Vermeidung von Reflexionen ist ein Brechungsindex der Matrix an einen Brechungsindex eines Substratmaterial des Projektionsschirmes so angepasst, dass die Brechungsindizes zumindest in etwa gleich sind. Die Matrix kann dabei in Form einer oder mehrer Schichten auf dem Substrat des Projektionsschirmes aufgebracht sein. In einer anderen Ausgestaltung kann die Matrix auch ein Substratmaterial des Projektionsschirmes bilden. Bei der Einbettung metallischer Nanopartikel in die Matrix ist vorgesehen, dass die Abmessungen der Partikel entsprechend des verwendeten Matrixmateriales adaptiert werden.

In einer weiteren Variante ist vorzugsweise zusätzlich vorgesehen, dass der Projektionsschirm ein wenigstens eine Schicht umfassendes Interferenzschichtsystem zur Beeinflussung des Transmissionsspektralbereiches umfasst. Bevorzugt umfasst dieses Interferenzschichtsystem eine oder mehrere dielektrischen Schichten. Weiter bevorzugt erfolgt mit Hilfe dieser Beschichtung eine Korrektur einer spektralen Emissionscharakteristik der Lichtquelle, beispielsweise zur Verbesserung eines Weißabgleiches. Des weiteren kann ein Interferenzschichtsystem auf einer der Lichtquelle zugewandten Seite des Projektionsschirmes vorgesehen werden, welches insbesondere jeweils im Bereich wenigstens einer Grundfarbe eine Transmission aufweist und im übrigen für einen Emissionsspektralbereich der Lichtquelle eine zumindest nahezu vollständige Reflexion aufweist.

Für eine verbesserte Abstrahlcharakteristik der Projektionsleinwand umfasst der Projektionsschirm wenigstens ein Streuelement. Beispielsweise wird das Streuelement durch eine rauhe Oberfläche des Projektionsschirmes gebildet. Die rauhe Oberfläche weist dabei insbesondere Rauhigkeitsstrukturen auf, die größer als die Wellenlängen des für das menschliche Auge sichtbaren Lichtspektralbereiches liegen. Vorzugsweise ist eine Oberflächentopographie so ausgestaltet, dass eine räumliche anisotrope Streucharakteristik erzeugt wird, wie dies beispielsweise in der DE 102 45 881 A1 beschrieben ist, auf die hiermit diesbezüglich im Rahmen der Offenbarung verwiesen wird. Zusätzlich oder alternativ kann ein separates Streuelement vorgesehen sein, welches in einen Strahlengang der Rückprojektionsvorrichtung eingebracht wird. Das Streuelement kann sowohl auf einer der Lichtquelle zugewandten als auch auf einer der Lichtquelle abgewandten Seite des Projektionsschirmes vorgesehen sein.

Besonders vorteilhaft ist es, wenn der Projektionsschirm auf der Frontseite eine Entspiegelung umfasst. Dabei handelt es sich beispielsweise um eine dielektrische Antireflexbeschichtung, die aus einer oder mehreren dielektrischen Schichten besteht. Des Weiteren kann beispielsweise mit Hilfe von Oberflächenstrukturen, die kleiner als die Lichtwellen-länge des Umgebungslichtes sind, die Reflexion wesentlich verringert werden. Diese Oberflächenstrukturen erzielen dabei insbesondere einen zur Oberfläche hin abnehmenden Brechungsindex. Derartige Entspiegelungen sind beispielsweise als sogenannte "Mottenaugen-Strukturen" bekannt. Derartige Mottenaugenstrukturen können an einer Oberfläche des Substrates selbst oder/und einer darauf befindlichen Beschichtung vorgesehen sein.

Des Weiteren ist es zweckmäßig, wenn der Projektionsschirm eine Antistatikbeschichtung umfasst. Dazu wird beispielsweise eine elektrisch leitfähige und insbesondere transparente Schicht eingesetzt. Z.B. werden eine oder mehrere transparente leitfähige Oxidschichten verwendet. Alternativ oder zusätzlich werden eine oder mehrere dünne Metallschichten insbesondere in Verbindung mit wenigsten einer dielektrischen Schicht verwendet. Bevorzugt wird ein Anhaften von Staubpartikeln aufgrund einer elektrischen Aufladung vermieden. Besonders bevorzugt werden dadurch unerwünschte Lichtstreueffekte an derartigen Staubpartikeln vermindert. Eine Antistatikbeschichtung wird vorzugsweise auf einer der Lichtquelle abgewandten Seite des Projektionsschirmes aufgebracht. Insbesondere zusätzlich kann eine Antistatikbeschichtung jedoch auch auf einer der Lichtquelle zugewandten Seite des Projektionsschirmes aufgebracht sein.

Zur Vermeidung einer Aufheizung des Projektionsschirmes infolge einer Bestrahlung durch Umgebungslicht wie beispielsweise Sonnenlicht ist vorgesehen, dass der Projektionsschirm eine Infrarotstrahlen reflektierende Beschichtung umfasst. Diese ist vorzugsweise auf einer der Lichtquelle abgewandten Seite des Projektionsschirmes aufgebracht. Bevorzugt handelt es sich hierbei um eine transparente leitfähige Schicht. Z.B. werden hier eine oder mehrere transparente leitfähige Oxidschichten verwendet. Alternativ oder zusätzlich werden eine oder mehrere dünne Metallschichten insbesondere in Verbindung mit wenigsten einer dielektrischen Schicht verwendet. Insbesondere zusätzlich ist eine Kühlvorrichtung, wie beispielsweise ein Gebläse, zur Kühlung des Projektionsschirmes vorgesehen.

Bevorzugt umfasst der Projektionsschirm eine specklevermindernde Oberflächentopographie. Damit werden insbesondere Speckles bei einer Beleuchtung mit Laserstrahlung vermieden oder zumindest vermindert. Beispielsweise ist die Topographie der Oberfläche so ausgestaltet, dass jeweils in einem Lichtfleck eines Laserstrahls liegende Teile der Oberfläche die zur Rückprojektion verwendete Laserstrahlung in Transmission in unterschiedliche Richtungen ablenken, so dass eine Ausbildung interferenzfähiger Wellenzüge durch Punkte, deren Abstand unterhalb des Auflösungsvermögens des Auges liegt, vermindert wird. Eine Oberflächentopographie weist dabei beispielsweise wellige oder kugelkappenförmige Strukturen auf. Diesbezüglich wird im Rahmen der Offenbarung auf die 10 2004 042 648 A1 verwiesen. Dort ist die Topographie der Oberfläche so ausgestaltet, dass jeweils in einem Lichtfleck eines Laserstrahls liegende Teile der Oberfläche die Laserstrahlung in unterschiedliche Richtungen reflektieren, so dass eine Remission interferenzfähiger Wellenzüge durch Punkte, deren Abstand unterhalb des Auflösungsvermögens des Auges liegt, vermindert wird. Entsprechend wird dieses Prinzip auf die Transmission angewendet, wobei vorzugsweise zur Strahlablenkung anstelle einer Reflexion an der Oberfläche eine Lichtbrechung an der Oberfläche ausgenutzt wird.

Des Weiteren betrifft die Erfindung einen Projektionsschirm für eine Rückprojektionsvorrichtung, insbesondere gemäß einer oben beschriebenen Ausgestaltung, mit wenigstens einer Lichtquelle, die zur Rückprojektion auf den zumindest außerhalb wenigstens eines spektral schmalbandigen Transmissionsspektralbereiches spektral selektiv absorbierend für ein Umgebungslicht eingestellten Projektionsschirm vorgesehen ist, welcher in zumindest einem für das menschliche Auge sichtbaren Lichtspektralbereich absorbierende absorbierende metallische Nanopartikel umfasst, wobei der Projektionsschirm eine Transmission von Nutzlicht innerhalb des Transmissionsspektralbereiches erlaubt.

Weiter ist Gegenstand der Erfindung ein Verfahren zur Darstellung zumindest statischer Bilder, wobei ein Projektionsschirm zur Rückprojektion mit einer Lichtquelle mit einem für das menschliche Auge sichtbaren Emissionsspektralbereich beleuchtet wird, wobei Nutzlicht in einem Transmissionsspektralbereich, der durch zumindest einen schmalbandigen Teilbereich des sichtbaren Lichtspektrums gebildet ist, spektral selektiv durch den Projektionsschirm transmittiert wird und sichtbares Umgebungslicht zumindest außerhalb des Transmissionsspektralbereiches vom Projektionsschirm zumindest nahezu vollständig absorbiert wird, wobei metallische Nanopartikel das Umgebungslicht in zumindest einem für das menschliche Auge sichtbaren Lichtspektralbereich absorbieren. Vorzugsweise ist ein Grad der Absorption von Umgebungslicht durch den Projektionsschirm zumindest außerhalb eines Nutzlichtspektralbereiches größer als 65%, weiter bevorzugt größer als 80%, besonders bevorzugt größer als 90% und ganz besonders bevorzugt größer als 95%, bezogen auf eine Intensität des einfallenden Umgebungslichtes auf den Projektionsschirm unter einem senkrechten Einfall. Vorzugsweise wird der Absorptionsgrad auch unter Zugrundelegung einer Mittelung über einen Einfallswinkelbereich erreicht. In einer ersten Variante ist die Absorption so bemessen, dass diese angegebenen Werte im Falle einer spektral integrierten Intensität des Umgebungslichtes erfüllt sind. In einer weiteren Variante werden diese angegebenen Werte für jede Wellenlänge des Umgebungslichtspektrums erfüllt.

Bevorzugt wird dabei mit mindestens drei Grundfarben, insbesondere mit jeweils zumindest einem Laser und/oder einer LED, wenigstens ein statisches und/oder bewegtes Farbbild auf dem Projektionsschirm rückprojiziert.

Insbesondere können bei der Rückprojektion bewegter Bilder Algorithmen verwendet werden, die auf Basis zuvor gezeigter und noch zu zeigender Bilder dynamische Verstärkungskurven für Grundfarben berechnen und zur Erzielung eines Eindruckes einer erhöhten Farbsättigung und/oder eines erhöhten Kontrastes modifizieren. Des weiteren werden beispielsweise optimierte elektronische Schnittstellen zur Minimierung von Fehlern aufgrund eines Bildrauschens infolge eines Signalrauschens verwendet.

Weiter bevorzugt wird mittels metallischer Nanopartikel, die eine anisotrope Form aufweisen und in einer Vorzugsrichtung relativ zum Projektionsschirm ausgerichtet sind, eine polarisationsabhängige Absorption und/oder Transmission, insbesondere im Bereich wenigstens einer Grundfarbe, erzielt. Besonders bevorzugt wird dabei ein Kontrast zwischen dem transmittierten Nutzlicht und dem remittierten Umgebungslicht erhöht.

Des Weiteren betrifft die Erfindung ein Verfahren zur Herstellung des Projektionsschirmes einer Rückprojektionsvorrichtung gemäß einer der oben beschriebenen Ausgestaltungen, wobei wenigstens ein in zumindest einem für das menschliche Auge sichtbaren Lichtspektralbereich außerhalb des Transmissionsspektralbereiches und insbesondere des Nutzlichtspektralbereiches absorbierender Stoff oder/und wenigstens ein Farbstoff oder/und metallische Nanopartikel auf ein Vorprodukt des Projektionsschirmes aufgebracht werden. Bei dem Vorprodukt handelt es sich beispielsweise um ein Substrat des Projektionsschirmes. Des weiteren handelt es sich beispielsweise um ein mit wenigstens einer Schicht beschichtetes Substrat des Projektionsschirmes. Der absorbierende Stoff und/oder der Farbstoff werden beispielsweise in einzelnen Schichten in Schichtdicken zwischen etwa jeweils 500 nm und 100 nm, bevorzugt in einem Schichtdickenbereich von 10 bis 100 nm auf das Substratmaterial des Projektionsschirmes aufgebracht. Insbesondere im Falle eines anorganischen absorbierenden Stoffes kann eine Beschichtung mittels eines physikalischen Vakuumdepositionsverfahrens (PVD), wie beispielsweise Aufdampfen, Sputtern, Magnetronsputtem oder dergleichen erfolgen. Des weiteren ist für eine Beschichtung beispielsweise ein insbesondere physikalisch unterstütztes chemisches Vakuumdepositionsverfahren (CVD, PECVD) vorgesehen.

Die metallischen Nanopartikel können ebenfalls auf die Oberfläche des Substrates aufgebracht werden. Besonders vorteilhaft werden der Farbstoff und/oder die Nanopartikel in eine Matrix, insbesondere in ein Substratmaterial des Projektionsschirmes, eingebettet.

Für eine Herstellung der metallischen Nanopartikel ist in einer ersten Variante vorgesehen, dass die metallischen Nanopartikel mittels Elektronenstrahl-Lithographie hergestellt werden. Vorzugsweise werden mit Hilfe der Elektronenstrahl-Lithographie Metallpartikel in definierter Geometrie hergestellt. Besonders bevorzugt werden Nanopartikel in einer zweidimensionalen Anordnung zueinander erzeugt. Dabei werden insbesondere Flächen mit einer regelmäßigen oder stochastisch über die Fläche verteilten Anordnung von Nanopartikel hergestellt.

In einer weiteren Variante für die Herstellung der Nanopartikel werden die Nanopartikel mittels wenigstens eines physikalischen Vakuumdepositionsverfahren hergestellt. Bevorzugt wird dabei ein plasma-ionengestütztes Verfahren verwendet. Weiter bevorzugt wird wenigstens ein Verfahren aus der Gruppe Magnetron-Sputtern, lonenstrahl-Sputtern und Arc-Beschichtungsverfahren verwendet. Besonders bevorzugt werden Nanopartikel mit einem Elektronenstrahl-Verdampfungsverfahren, wie beispielsweise in der Veröffentlichung "The optical response of silver island films embedded in fluoride and oxide optical materials", Stenzel et al., Physics, Chemistry and application of nanostructures (2003), Seite 158ff., beschrieben ist, hergestellt. Auf diese Veröffentlichung wird im Rahmen der Offenbarung diesbezüglich verwiesen.

Des weiteren kann ein Printverfahren zur Herstellung metallischer Nanopartikel vorgesehen werden. Ein Printverfahren kann dabei eine insbesondere lokale Funktionalisierung einer Oberfläche beinhalten. Dazu wird beispielsweise eine Barriereentladung eingesetzt. Z.B. kann mittels einer Barriereentladung eine lokale Oberflächenaktivierung insbesondere zur Beeinflussung einer Schichthaftung in einem nachfolgenden Printprozess erfolgen. Vorzugsweise wird dies für eine lokal selektive Beschichtung genutzt.

Zur Herstellung eines Projektionsschirmes sowie metallischer Nanopartikel kann auch eine Kombination mehrerer insbesondere der vorstehenden Verfahren herangezogen werden.

Weiter vorteilhaft wird die Matrix mittels Aufsprühen, Rakeln, Pinseln, eines Sol-Gel-Verfahren oder/und Aufdampfen auf das Vorprodukt des Projektionsschirmes aufgebracht.

In einer bevorzugten Ausgestaltung wird wenigstens ein Farbstoff mittels Co-Verdampfen von Farbstoff und Matrix in die Matrix eingebettet. Insbesondere werden Matrix und Farbstoff gleichzeitig auf ein Vorprodukt des Projektionsschirmes aufgedampft. Besonders zweckmäßig wird dabei ein thermisches Aufdampfverfahren angewendet. Bevorzugt wird dazu eine anorganische Matrix eingesetzt. In einer anderen Variante kann jedoch auch eine organische Matrix verwendet werden.

Schließlich betrifft die Erfindung eine Verwendung einer Rückprojektionsvorrichtung nach Anspruch 1, insbesondere gemäß einer der oben beschriebenen Ausgestaltungen, als Anzeigelement in einer mit Tageslicht oder/und Kunstlicht beleuchteten Umgebung. Beispielsweise ist eine Verwendung der Projektionsvorrichtung in einer Außenanwendung, zum Beispiel als Anzeigeelement in einem Stadion oder dergleichen vorgesehen. Vorzugsweise ist ein rückprojiziertes Bild auch bei hellem Tageslicht deutlich zu erkennen. Des Weiteren ist für die Rückprojektionsvorrichtung beispielweise eine Verwendung innerhalb von Gebäuden vorgesehen. Vorzugsweise findet die Rückprojektionsvorrichtung an Orten Verwendung, an denen eine Reduktion von Umgebungslicht nicht möglich oder nicht gewünscht ist. Beispielsweise ist die Rückprojektionsvorrichtung als Anzeigeelement in öffentlich zugänglichen Hallen, wie beispielsweise Bahnhofshallen oder dergleichen, vorgesehen.

Im Folgenden wird die Erfindung anhand der Zeichnung im Einzelnen erläutert. Die Merkmale sind dort jeweils jedoch nicht auf die einzelnen Ausgestaltungen beschränkt. Vielmehr sind jeweils in der Zeichnung oder/und in der Beschreibung einschließlich der Figurenbeschreibung angegebene Merkmale jeweils zu Weiterbildungen kombinierbar.

Es zeigen:
Fig. 1 eine erste Rückprojektionsvorrichtung,
Fig. 2 eine zweite Rückprojektionsvorrichtung,
Fig. 3 einen spektralen Absorptionsverlauf eines Projektionsschirmes,
Fig. 4 einen spektralen Transmissionsverlauf eines Projektionsschirmes,
Fig. 5 eine Absorptionscharakteristik verschiedener metallischer Nanopartikel,
Fig. 6 eine Absorptionscharakteristik von Coumarin 120,
Fig. 7 eine Absorptionscharakteristik von Pyrromethene 546,
Fig. 8 eine Absorptionscharakteristik von DODCI,
Fig. 9 eine Absorptionscharakteristik von Cryptocyanine,
Fig. 10 eine Absorptionscharakteristik von DOCI und
Fig. 11 eine Absorptionscharakteristik von DQOCI.

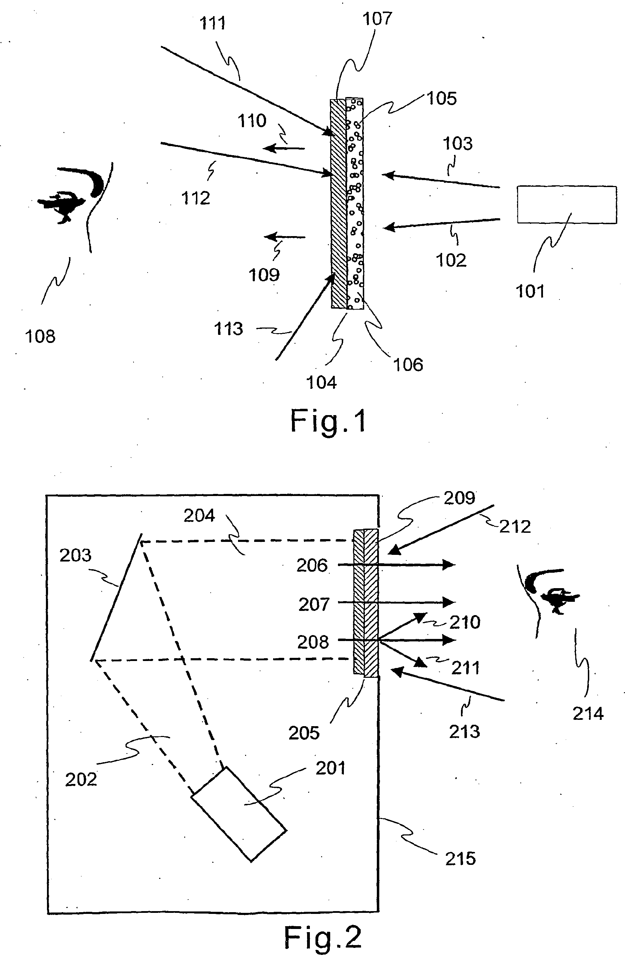

Fig. 1 zeigt schematisch eine erste Rückprojektionsvorrichtung. Eine erste Lichtquelle 101 mit einer darin enthaltenen nicht separat dargestellten Bilderzeugungsvorrichtung emittiert einen exemplarisch gezeigten ersten Nutzlichtstrahl 102 sowie einen zweiten Nutzlichtstrahl 103, welche auf den ersten Projektionsschirm 104 treffen. Dieser weist auf einer der ersten Lichtquelle 101 zugewandten Seite ein Substrat 105 mit in einer Matrix des Substratmaterials eingebetteten metallischen Nanopartikeln 106 auf, die spektral selektiv absorbieren. Des Weiteren umfasst der erste Projektionsschirm 104 eine erste spektral selektiv absorbierende Schicht 107. Die Nutzlichtstrahlen werden durch den ersten Projektionsschirm 104 transmittiert, so dass auf der dem ersten Betrachter 108 zugewandten Seite exemplarisch ein erster transmittierter Nutzlichtstrahl 109 und ein zweiter transmittierter Nutzlichtstrahl 110 austreten. Des Weiteren sind exemplarisch ein erster 111, ein zweiter 112 und ein dritter Umgebungslichtstrahl 113 gezeigt, die von der dem ersten Betrachter 108 zugewandten Seite auf den ersten Projektionsschirm 104 fallen. Aufgrund der ersten spektral selektiv absorbierenden Schicht 107 sowie der spektral selektiv absorbierenden metallischen Nanopartikel ist eine Remission der einfallenden Umgebungslichtstrahlen vernachlässigbar, so dass der erste Betrachter 108 vom ersten Projektionsschirm lediglich die exemplarisch gezeigten transmittierten Nutzlichtstrahlen 109 und 110 wahrnimmt.

Bei der ersten Lichtquelle mit integrierter Bilderzeugungsvorrichtung handelt es sich beispielsweise um eine nicht im Detail dargestellte Projektionsvorrichtung analog einem Videoprojektor. Bevorzugt handelt es sich beispielsweise auch um eine Laserbilderzeugungsvorrichtung.

Fig. 2 zeigt eine zweite Rückprojektionsvorrichtung. Eine zweite Lichtquelle 201 sendet ein erstes Lichtstrahlbündel 202 aus, welches ein Mikrospiegelarray 203 beleuchtet. Dieses ist mit einer Vielzahl von nicht dargestellten Mikrospiegeln für jeweils die drei Grundfarben rot, grün und blau ausgestattet. Die Mikrospiegel spiegeln das empfangene Licht in einem zweiten Lichtstrahlbündel 204 auf einen zweiten Projektionsschirm 205. Dabei sind die Mikrospiegel so angeordnet, dass jeweils ein Mikrospiegel für eine Farbe und jeweils einen ebenfalls nicht dargestellten Bildpunkt auf dem zweiten Projektionsschirm 205 an-und ausschalten kann. Die zweite Lichtquelle 201 umfasst eine rote, eine grüne und eine blaue Grundfarbe. Diese können beispielsweise, nicht dargestellt, mittels einer spektralen Zerlegung einer breitbandigen Lichtquelle erzeugt werden. Die Zerlegung erfolgt beispielsweise mit einem Farbrad. Des Weiteren handelt es sich in einer anderen, ebenfalls nicht gezeigten Variante der zweiten Lichtquelle 201 um laser-basierte Grundfarben. Der zweite Projektionsschirm 205 ist wiederum für mit dem menschlichen Auge sichtbares Umgebungslicht spektral selektiv absorbierend. Dahingegen wird Nutzlicht in einem Transmissionsspektralbereich transmittiert. Der Transmissionsspektralbereich wird durch jeweils einen schmalbandigen roten, blauen und grünen Spektralbereich gebildet. Somit werden ein roter Lichtstrahl 206, ein grüner Lichtstrahl 207 sowie ein blauer Lichtstrahl 208, die jeweils exemplarisch gezeigt sind, im wesentlichen ungehindert durch den zweiten Projektionsschirm 205 transmittiert. Aufgrund des verwendeten Diffusors 209 erfolgt im Diffusor 209 eine Streuung der transmittierten Lichtstrahlen, so dass hier exemplarisch am Beispiel des blauen Lichtstrahls 208 gezeigt, ein erster Streustrahl 210 und ein zweiter Streustrahl 211 resultieren. Daneben entstehen eine Reihe weiterer, nicht dargestellter Streustrahlen. Aufgrund der spektral selektiven Absorption des zweiten Projektionsschirmes 205 wird ein vierter Umgebungslichtstrahl 212 und ein fünfter Umgebungslichtstrahl 213 von dem zweiten Projektionsschirm 205 absorbiert, so dass eine Remission der Umgebungslichtstrahlen vernachlässigbar ist. Ein zweiter Betrachter 214 sieht daher in diesem Beispiel lediglich die Nutzlichtstrahlen, die in diesem Fall exemplarisch gezeigt der rote Lichtstrahl 206, der grüne Lichtstrahl 207 und der blaue Lichtstrahl 208 sowie die entsprechenden gestreuten Lichtstrahlen sind.

Des Weiteren umfasst die zweite Rückprojektionsvorrichtung ein Gehäuse 215, welches einen direkten Austritt von der zweiten Lichtquelle emittierten Lichtes verhindert. Insbesondere stellt das Gehäuse 215 sicher, dass der zweite Betrachter 214 bei Verwendung von Laserstrahlen als zweite Lichtquelle 201 nicht durch direkte Laserstrahlen geschädigt werden kann.

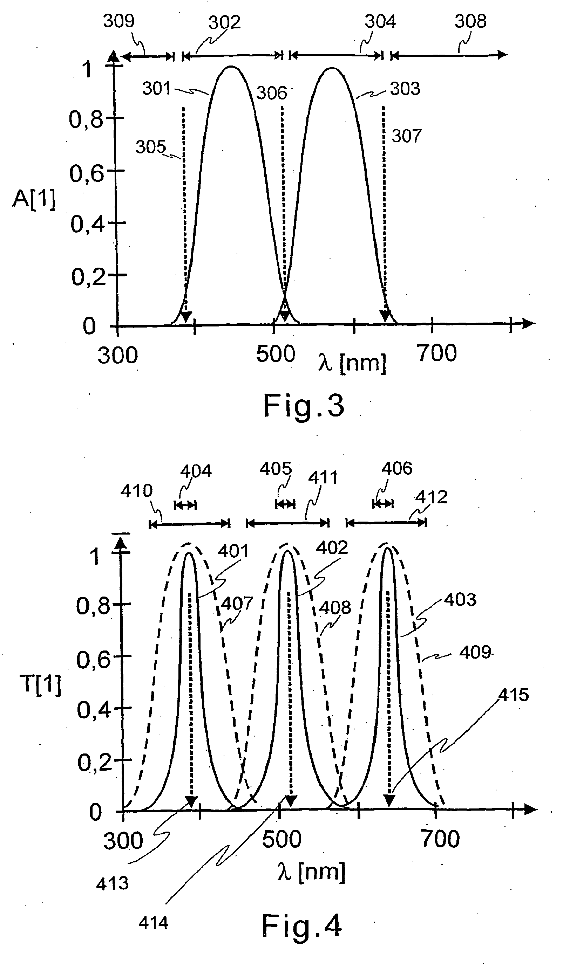

Fig. 3 zeigt einen schematischen spektralen Absorptionsverlauf eines Projektionsschirmes. Das Diagramm zeigt eine erste Absorptionskurve 301, die einen ersten Absorptionsspektralbereich 302 definiert, der in diesem Fall durch eine Zehnprozent-Breite definiert ist. Des Weiteren zeigt das Diagramm eine zweite Absorptionskurve 303, die einen zweiten Absorptionsspektralbereich 304 definiert, wobei dieser wiederum durch die entsprechende Zehnprozentbreite festgelegt ist. Außerdem sind in das Diagramm die spektralen Lagen einer ersten Grundfarbe 305, einer zweiten Grundfarbe 306 sowie einer dritten Grundfarbe 307 eingetragen, wobei es sich jeweils um spektral reine Grundfarben handelt. Diese Grundfarben liegen in diesem Beispiel bei 447 nm, 532 nm sowie 627 nm und bilden somit eine blaue, eine grüne und eine rote Grundfarbe. Zusätzlich zu dem hier gezeigten ersten 302 und zweiten Absorptionsspektralbereich 304 kann eine hier nicht dargestellte Absorption im nahen infraroten Spektralbereich 308 und/oder im ultravioletten Spektralbereich 309 vorgesehen sein. In dem gezeigten Beispiel wird der erste Absorptionsbereich durch Pyrromethen 546 sowie der zweite Absorptionsbereich durch DODCI gebildet. Die Grundfarben 447 nm, 532 nm und 627 nm werden beispielsweise durch Verwendung eines Festkörperlasers mit Frequenzverdopplern realisiert.

Fig. 4 zeigt einen schematischen spektralen Transmissionsverlauf eines Projektionsschirmes. Das Diagramm zeigt eine erste Transmissionsspektralkurve 401, eine zweite Transmissionsspektralkurve 402 sowie eine dritte Transmissionsspektralkurve 403. Diese Transmissionsspektralkurven werden durch eine entsprechend spektral selektive Absorption des Projektionsschirmes ähnlich zu dem in Fig. 3 gezeigten Verlauf definiert. Diesen Transmissionsspektralkurven ist ein erster Transmissionsspektralbereich 404, ein zweiter Transmissionsspektralbereich 405 sowie ein dritter Transmissionsspektralbereich 406 zugeordnet, wobei die Transmissionsspektralbereiche jeweils durch eine Zehnprozent-Breite definiert sind. Des Weiteren zeigt das Diagramm eine erste Emissionsspektralkurve 407, eine zweite Emissionsspektralkurve 408 sowie eine dritte Emissionsspektralkurve 409, wobei diese jeweils auf den Wert "1" normiert sind. Diesen Emissionsspektralkurven können wiederum beispielsweise anhand der Halbwertsbreite ein erster Emissionsspektralbereich 410, ein zweiter Emissionsspektralbereich 411 sowie ein dritter Emissionsspektralbereich 412 zugeordnet werden. In diesem Fall überschreiten die Emissionsspektralbereiche 410, 411, 412 die zugehörigen Transmissionsspektralbereiche 404, 405, 406. Demzufolge wird nur ein Anteil des von der Lichtquelle emittierten Lichtes als Nutzlicht transmittiert, wohingegen die übrigen Anteile absorbiert werden. Die Emissionsspektralkurven werden beispielsweise durch eine spektrale Zerlegung einer breitbandigen Lichtquelle, beispielsweise mittels Farbfiltern, gebildet. Des Weiteren sind in dem Diagramm eine erste Laserwellenlänge 413, eine zweite Laserwellenlänge 414 sowie eine dritte Laserwellenlänge 415 eingezeichnet. Dabei handelt es sich um die Wellenlängen 447 nm (blau), 532 nm (grün) und 627 nm (rot). In diesem Fall wird nur ein kleiner Teilbereich der jeweiligen Transmissionsspektralbereiche zur Transmission von Nutzlicht verwendet.

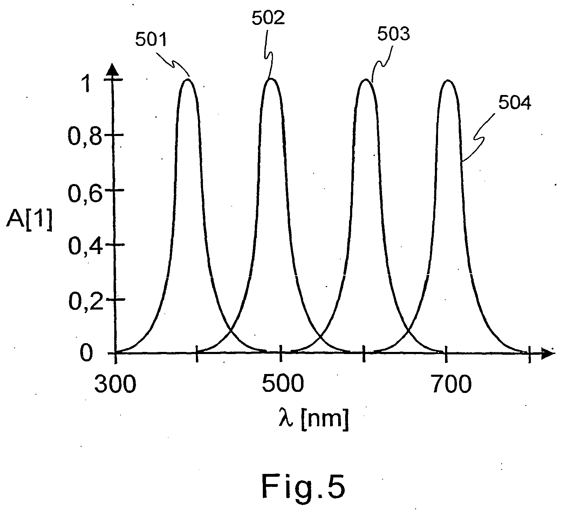

Fig. 5 zeigt eine schematische Absorptionscharakteristik verschiedener metallischer Nanopartikel. Das Diagramm zeigt einen ersten 501, einen zweiten 502, einen dritten 503 sowie einen vierten 504 charakteristischen Absorptionsverlauf. Diese spektralen Absorptionsverläufe sind jeweils einer mittleren Größe metallischer Nanopartikel zugeordnet. Die Größe der metallischen Nanopartikel nimmt dabei im Diagramm von links nach rechts von kleinen zu großen Wellenlängen zu.

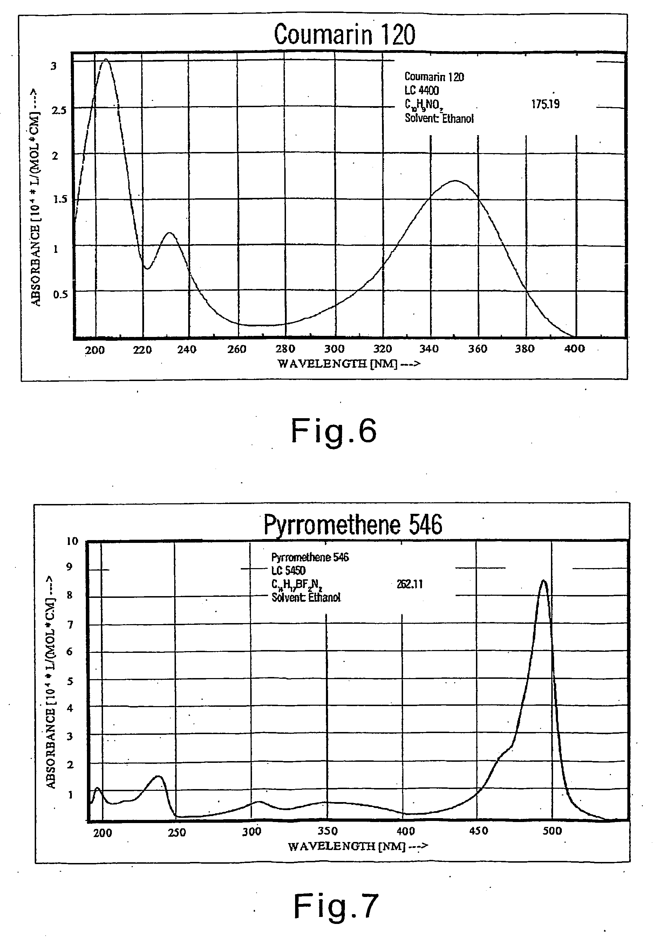

Die Figuren 6 bis 11 zeigen Absorptionscharakteristiken verschiedener Farbstoffe, die als Laserfarbstoffe beispielsweise von der Lambda Physik AG, Hans-Böckler-Straße 12, D-37079 in Deutschland bezogen werden können.

In den gezeigten Diagrammen ist auf der Abszisse jeweils eine Lichtwellenlänge in nm aufgetragen. Auf der Ordinate ist jeweils ein molarer Extinktionskoeffizient in 10⁻⁴l/(mol cm) aufgetragen. Als Lösungsmittel ist für die Farbstoffe jeweils Ethanol verwendet. Für Einzelheiten bezüglich der Farbstoffe wird im Rahmen der Offenbarung auf den Katalog "Lambdachrome^{®} Laser Dyes", 3rd Edition (2000), Ulrich Brackmann, Lambda Physik AG, Hans-Böckler-Straße 12, D-37079 Göttingen, Deutschland, verwiesen.

Fig. 6 zeigt eine Absorptionscharakteristik von Coumarin 120. Dieser Farbstoff wird vorzugsweise zur Erzielung einer Absorption im nahen ultravioletten Spektralbereich verwendet.

Fig. 7 zeigt eine Absorptionscharakteristik von Pyrromethene 546. Dieser Farbstoff beispielsweise zur Absorption in einem Spektralbereich zwischen einer blauen und einer grünen Grundfarbe verwendet.

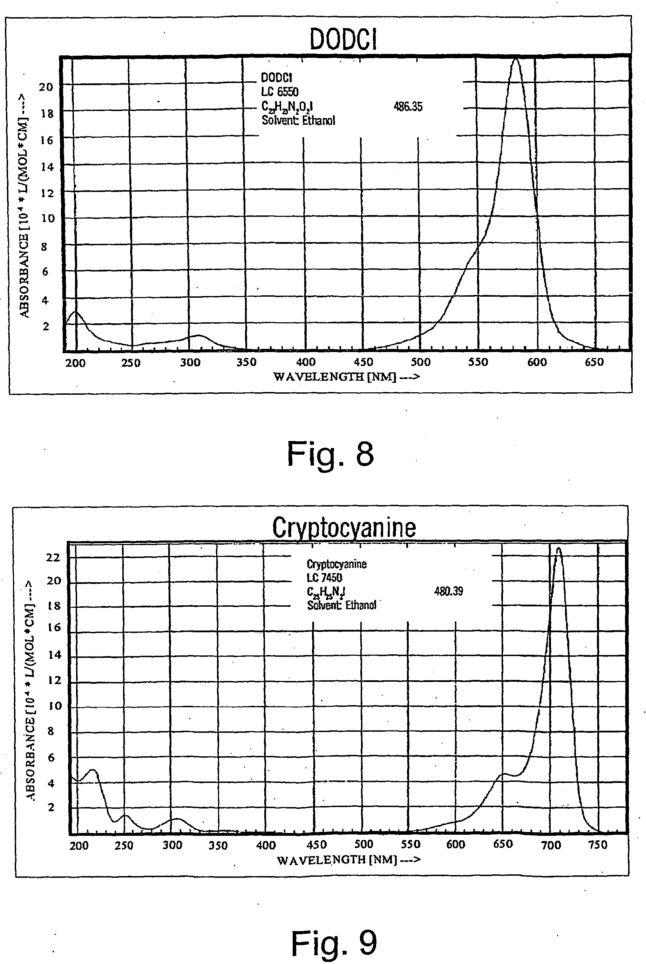

Fig. 8 zeigt eine Absorptionscharakteristik von DODCI. Mit diesem Farbstoff lässt sich bevorzugt eine Absorption in einem Spektralbereich zwischen einer grünen und einer roten Grundfarbe bereitstellen.

Fig. 9 zeigt eine Absorptionscharakteristik von Cryptocyanine. Dieser Farbstoff stellt vorzugsweise eine Absorption in einem nahen infraroten Spektralbereich bereit.

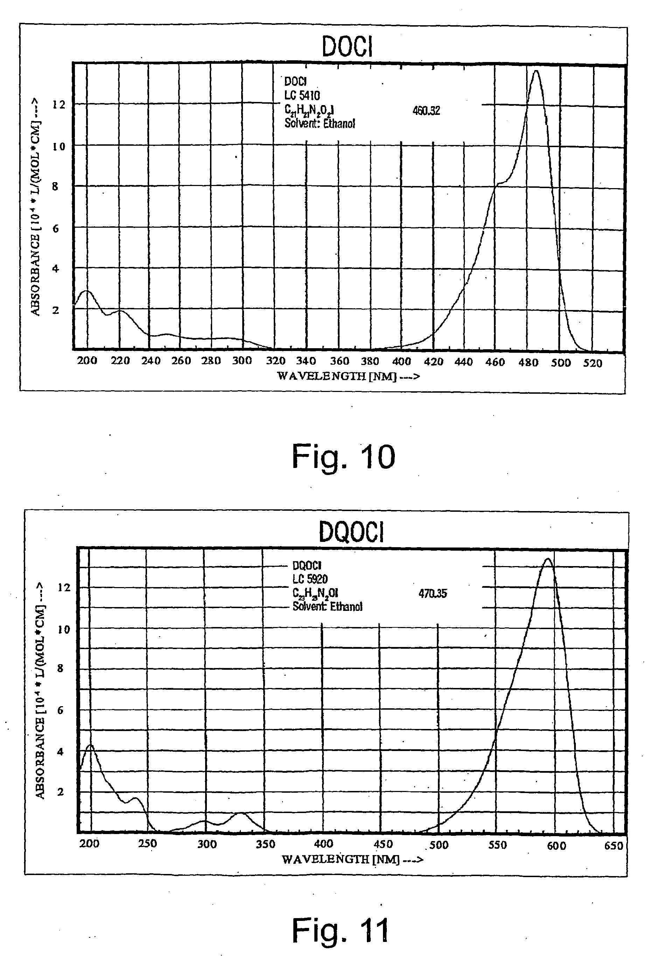

Fig. 10 zeigt eine Absorptionscharakteristik von DOCI. Dieser Farbstoff kann alternativ oder zusätzlich zu Pyrromethene 546 vorzugsweise zur Bereitstellung einer Absorption in einem Spektralbereich zwischen einer blauen und einer grünen Grundfarbe verwendet werden.

Fig. 11 zeigt eine Absorptionscharakteristik von DQOCI. Zusätzlich oder alternativ zu DODCI kann dieser Farbstoff insbesondere eine Absorption in einem Spektralbereich zwischen einer grünen und einer roten Grundfarbe bereitstellen.

## Patentansprüche

1. Rückprojektionsvorrichtung zur Darstellung zumindest statischer Bilder, umfassend wenigstens einen Projektionsschirm (104; 205) und wenigstens eine Lichtquelle (101; 201) mit einem Emissionsspektralbereich (410; 411; 412), die zur Rückprojektion auf den zumindest außerhalb wenigstens eines spektral schmalbandigen Transmissionsspektralbereiches (404; 405; 406) spektral selektiv absorbierend für ein Umgebungslicht eingestellten Projektionsschirm (104; 205) vorgesehen ist, **dadurch gekennzeichnet, dass** der Projektionsschirm (104; 205) in zumindest einem für das menschliche Auge sichtbaren Lichtspektralbereich dafür ausgewählte absorbierende metallische Nanopartikel (106) umfasst, wobei der Projektionsschirm (104; 205) eine Transmission von Nutzlicht innerhalb des Transmissionsspektralbereiches (404; 405; 406) erlaubt.

2. Rückprojektionsvorrichtung nach Anspruch 1, **dadurch gekennzeichnet, dass** eine Größe der metallischen Nanopartikel so bemessen ist, dass an den metallischen Nanopartikeln innerhalb des für das menschliche Auge sichtbaren Lichtspektralbereiches Oberflächenplasmonen anregbar sind.

3. Rückprojektionsvorrichtung nach Anspruch 1 oder 2, **dadurch gekennzeichnet, dass** durch die metallischen Nanopartikel zumindest ein absorbierender Spektralbereich zwischen zwei Grundfarben des Nutzlichtes bereitgestellt ist.

4. Rückprojektionsvorrichtung nach einem der vorhergehenden Ansprüche, **dadurch gekennzeichnet, dass** die metallischen Nanopartikel (106) einen mittleren Durchmesser zwischen 100 nm und 200 nm, bevorzugt zwischen 60 und 100 nm sowie besonders bevorzugt zwischen 5 und 60 nm aufweisen.

5. Rückprojektionsvorrichtung nach einem der vorhergehenden Ansprüche, **dadurch gekennzeichnet, dass** die metallischen Nanopartikel (106) jeweils eine anisotrope Form aufweisen und in einer Vorzugsrichtung relativ zum Projektionsschirm (104; 205) ausgerichtet sind.

6. Rückprojektionsvorrichtung nach einem der vorhergehenden Ansprüche, **dadurch gekennzeichnet, dass** der Emissionsspektralbereich (410; 411; 412) zumindest teilweise innerhalb des Transmissionsspektralbereiches (404; 405; 406) liegt.

7. Rückprojektionsvorrichtung nach einem der vorhergehenden Ansprüche, **dadurch gekennzeichnet, dass** der Transmissionsspektralbereich (404; 405; 406) durch wenigstens drel schmalbandige Teilbereiche, insbesondere jeweils im Bereich einer Grundfarbe (305; 306; 307), des für das menschliche Auge sichtbaren Lichtspektrums gebildet ist.

8. Rückprojektionsvorrichtung nach einem der vorhergehenden Ansprüche, **dadurch gekennzeichnet, dass** als Lichtquelle (101; 201) wenigstens ein Laser oder/und eine LED, insbesondere im Spektralbereich einer Grundfarbe (305; 306; 307), vorgesehen ist.

9. Rückprojektionsvorrichtung nach einem der vorhergehenden Ansprüche, **dadurch gekennzeichnet, dass** als Lichtquelle (101; 201) eine spektral breitbandige Lichtquelle in Verbindung mit einer Spektralbereichzerlegung, insbesondere zur Bereitstellung wenigstens eines Spektralbereiches einer Grundfarbe (305; 306; 307), vorgesehen ist.

10. Rückprojektionsvorrichtung nach einem der vorhergehenden Ansprüche, **dadurch gekennzeichnet, dass** der Emissionsspektralbereich (410; 411; 412) der Lichtquelle (101; 201) Spektralbereiche wenigstens dreier Grundfarben (305; 306; 307) umfasst.

11. Rückprojektionsvorrichtung nach einem der vorhergehenden Ansprüche, **dadurch gekennzeichnet, dass** der. Projektionsschirm (104; 205) wenigstens einen in zumindest einem für das menschliche Auge sichtbaren Lichtspektralbereich absorbierenden Farbstoff und/oder Farbpigmente und/oder wenigstens ein anorganisches Material umfasst.

12. Rückprojektionsvorrichtung nach einem der vorhergehenden Ansprüche, **dadurch gekennzeichnet, dass** der Projektionsschirm (104; 205) zumindest in einem ersten Spektralbereich (302) zwischen 447 nm und 532 nm und in einem zweiten Spektralbereich (304) zwischen 532 nm und 629 nm sowie insbesondere im ultravioletten Spektralbereich (309) und/oder im infraroten Spektralbereich (308) absorbiert.

13. Rückprojektionsvorrichtung nach einem der vorhergehenden Ansprüche, **dadurch gekennzeichnet, dass** der Projektionsschirm (104; 205) eine Matrix zur Einbettung wenigstens eines in zumindest einem für das menschliche Auge sichtbaren Lichtspektralbereich absorbierenden Stoffes und/oder eines Farbstoffes und/oder metallischer Nanopartikel (106) umfasst.

14. Rückprojektionsvorrichtung nach einem der vorhergehenden Ansprüche, **dadurch gekennzeichnet, dass** der Projektionsschirm (104: 205) ein wenigstens eine Schicht umfassendes Interferenzschichtsystem zur Beeinflussung des Transmissionsspektralbereiches umfasst.

15. Rückprojektionsvorrichtung nach einem der vorhergehenden Ansprüche, **dadurch gekennzeichnet, dass** der Projektionsschirm (104: 205) wenigstens ein Streuelement (209) umfasst.

16. Rückprojektionsvorrichtung nach einem der vorhergehenden Ansprüche, **dadurch gekennzeichnet, dass** der Projektionsschirm (104; 205) auf einer Frontseite eine Entspiegelung umfasst.

17. Rückprojektionsvorrichtung nach einem der vorhergehenden Ansprüche, **dadurch gekennzeichnet, dass** der Projektionsschirm (104; 205) eine Antistatikbeschichtung umfasst.

18. Rückprojektionsvorrichtung nach einem der vorhergehenden Ansprüche, **dadurch gekennzeichnet, dass** der Projektionsschirm (104; 205) eine Infrarotstrahlen reflektierende Beschichtung umfasst.

19. Rückprojektionsvorrichtung nach einem der vorhergehenden Ansprüche, **dadurch gekennzeichnet, dass** der Projektionsschirm (104: 205) eine specklevermindernde Oberflächentopographie umfasst.

20. Projektionsschirm einer Rückprojektionsvorrichtung nach einem der Ansprüche 1 bis 19.

21. Verfahren zur Darstellung zumindest statischer Bilder, wobei ein Projektionsschirm (104; 205) zur Rückprojektion mit einer Lichtquelle (101; 201) mit einem für das menschliche Auge sichtbaren Emissionsspektralbereich (410; 411; 412)) beleuchtet wird, wobei Nutzlicht in einem Transmissionsspektralbereich (404; 405; 406), der durch zumindest einen schmalbandigen Teilbereich des sichtbaren Lichtspektrums gebildet ist, spektral selektiv durch den Projektionsschirm (104; 205) transmittiert wird und sichtbares Umgebungslicht zumindest außerhalb des Transmissionsspektralbereiches (404; 405; 406) vom Projektionsschirm (104; 205) zumindest nahezu vollständig absorbiert wird, **dadurch gekennzeichnet, dass** dafür ausgewählte metallische Nanopartikel (106) das Umgebungslicht in zumindest einem für das menschliche Auge sichtbaren Lichtspektralbereich absorbieren.

22. Verfahren nach Anspruch 21, **dadurch gekennzeichnet, dass** mit wenigstens drei Grundfarben (305; 306; 307), insbesondere mit jeweils zumindest einem Laser und/oder einer LED, wenigstens ein statisches und/oder bewegtes Farbbild auf den Projektionsschirm (104; 205) rückprojiziert wird.

23. Verfahren nach Anspruch 21 oder 22, **dadurch gekennzeichnet, dass** mittels metallischer Nanopartikel, die eine anisotrope Form aufweisen und in einer Vorzugsrichtung relativ zum Projektionsschirm (104; 205) ausgerichtet sind, eine polarisationsabhängige Absorption und/oder Transmission, insbesondere im Bereich wenigstens einer Grundfarbe (305; 306; 307), erzielt wird.

24. Verfahren zur Herstellung eines Projektionsschirmes (104; 205) einer Rückprojektionsvorrichtung nach wenigstens einem der Ansprüche 1 bis 19, wobei wenigstens ein in zumindest einem für das menschliche Auge sichtbaren Lichtspektralbereich außerhalb des Transmissionsspektralbereiches (404; 405; 406) absorbierender Stoff oder/und wenigstens ein Farbstoff oder/und die metallischen Nanopartikel auf ein Vorprodukt des Projektionsschirmes (104; 205) aufgebracht werden.

25. Verfahren nach Anspruch 24, **dadurch gekennzeichnet, dass** die Nanopartikel (106) mittels wenigstens eines physikalischen Vakuumdepositionsverfahrens hergestellt werden.

26. Verfahren nach Anspruch 24 oder 25, **dadurch gekennzeichnet, dass** die Nanopartikel mittels eines Print-Verfahrens hergestellt werden.

27. Verfahren nach einem der Ansprüche 24 bis 26, **dadurch gekennzeichnet, dass** die Nanopartikel mittels Elektronenstrahl-Lithographie hergestellt werden.

28. Verfahren nach einem der Ansprüche 24 bis 27, **dadurch gekennzeichnet, dass** der Farbstoff oder/und die Nanopartikel (106) in eine Matrix, insbesondere in ein Substratmaterial des Projektionsschirmes (104; 205), eingebettet werden.

29. Verfahren nach einem der Ansprüche 24 bis 28, **dadurch gekennzeichnet, dass** die Matrix mittels Aufsprühen, Rakeln, Pinseln, Sol-Gel-Verfahren oder/und Aufdampfen auf ein Vorprodukt des Projektionsschirmes (104; 205) aufgebracht wird.

30. Verfahren nach einem der Ansprüche 24 bis 29, **dadurch gekennzeichnet, dass** wenigstens ein Farbstoff mittels Co-Verdampfen von Farbstoff und Matrix in die Matrix eingebettet wird.

31. Verwendung einer Rückprojektionsvorrichtung nach einem der Ansprüche 1 bis 19 als Anzeigeelement in einer mit Tageslicht oder/und Kunstlicht beleuchteten Umgebung.

## Claims

1. A rear projection device for representing at least static images, comprising at least one projection screen (104; 205) and at least one light source (101; 201) with an emission spectral range (410; 411; 412) for rear projection onto a projection screen (104, 205) adjusted to be spectral-selective absorbing for an ambient light at least outside of at least one spectrally narrowband transmission spectral range (404; 405; 406), **characterized in that** said projection screen (104; 205) encompasses absorbing metallic nanoparticles (106) selected therefore in at least one spectral range of light that is visible to the human eye, whereby the projection screen (104; 205) permits a transmission of useful light inside the transmission spectral range (404; 405; 406).

2. Rear projection device according to claim 1, **characterized in that** a dimension of the metallic nanoparticles is calculated in such a way that surface plasmons can be excited at the metallic nanoparticles within the spectral light range visible to the human eye.

3. Rear projection device according to claims 1 or 2, **characterized in that** the metallic nanoparticles provide at least one absorbing spectral range between two base colors of the useful light.

4. Rear projection device according to one of the preceding claims, **characterized in that** the metallic nanoparticles (106) have a median diameter of between 100 nm and 200 nm, preferably between 60 nm and 100 nm, especially preferable between 5 and 60 nm.

5. Rear projection device according to one of the preceding claims, **characterized in that** the metallic nanoparticles (106) each have an anisotropic form and are adjusted in preferred relative orientation to the projection screen (104; 205).

6. Rear projection device according to one of the preceding claims, **characterized in that** at least portions of the emission spectral range (410; 411; 412;) lie within the transmission spectral range (404; 405; 406).

7. Rear projection device according to one of the preceding claims, **characterized in that** the transmission spectral range (404; 405; 406) consists of at least three narrow-band portions, in particular each in the range of a base color (305; 306; 307) of the light spectrum visible to the human eye.

8. Rear projection device according to one of the preceding claims, **characterized in that** at least one laser and/or one LED is provided as a light source (101; 201), particularly in the spectral range of a base color (305; 306; 307).

9. Rear projection device according to one of the preceding claims, **characterized in that** a broad-band spectral light source in connection with a spectral range resolution is provided as a light source (101; 201), especially to provide at least one spectral range of a base color (305; 306; 307).

10. Rear projection device according to one of the preceding claims, **characterized in that** the spectral emission range (410; 411; 412) of the light source (101; 201) comprises spectral ranges of at least three base colors (305; 306; 307).

11. Rear projection device according to one of the preceding claims, **characterized in that** the projection screen (104; 205) comprises at least one absorbing dye and/or pigments and/or at least one inorganic material in at least one spectral light range that is visible to the human eye.

12. Rear projection device according to one of the preceding claims, **characterized in that** the projection screen (104; 205) absorbs at least in a first spectral range (302) between 447 nm and 532 nm and in a second spectral range (304) between 532 nm and 629 nm, as well as particularly in the ultra-violet spectral range (309) and/or in the infrared spectral range (308).

13. Rear projection device according to one of the preceding claims, **characterized in that** the projection screen (104; 205) comprises a matrix to imbed at least one absorbing substance and/or one dye and/or metallic nanoparticles (106) in at least one spectral light range that is visible to the human eye.

14. Rear projection device according to one of the preceding claims, **characterized in that** the projection screen (104; 205) comprises an interference coating system involving at least one layer in order to affect the transmission spectral range.

15. Rear projection device according to one of the preceding claims, **characterized in that** the projection screen (104; 205) comprises at least one dispersion element (209).

16. Rear projection device according to one of the preceding claims, **characterized in that** the front surface of the projection screen (104; 205) comprises an antireflection.

17. Rear projection device according to one of the preceding claims, **characterized in that** the projection screen (104; 205) comprises an a anti-static coating.

18. Rear projection device according to one of the preceding claims, **characterized in that** the projection screen (104; 205) comprises a coating which reflects infrared beams.

19. Rear projection device according to one of the preceding claims, **characterized in that** the projection screen (104; 205) comprises a speckle-reducing topographic surface.

20. Projection screen of a rear projection device according to one of the claims I to 19.

21. Method for representing at least static images, wherein a projection screen (104; 205) is illuminated for rear projection by a light source (101; 201) with an emission spectral range (410; 411; 412) visible to the human eye, wherein useful light in a transmission spectral range (404; 405; 406) that is formed by at least one narrowband subrange of the visible light spectrum, is transmitted spectral-selectively through the projection screen (104; 205), and visible ambient light, at least outside transmission spectral range (404; 405; 406), is at least nearly completely absorbed by the projection screen (104; 205), **characterized in that** metallic nanoparticles (106) selected therefore absorb the ambient light in at least one spectral light range that is visible to the human eye.

22. Method according to Claim 21, **characterized in that** at least one static and/or moving colored image is rear-projected onto the projection screen (104; 205) with at least three primary colors (305; 306; 307), in particular, with at least one respective laser and/or one LED.

23. Method according to claim 21 or 22, **characterized in that** a polarization-dependent absorption and/or transmission, in particular, in the range of at least one primary color (305; 306; 307) is achieved by means of metallic nanoparticles that have an anisotropic form and are oriented in a preferential direction relative to the projection screen (104; 205).

24. Method for manufacturing a projection screen (104; 205) of a rear projection device according to at least one of the claims 1 to 19, wherein at least one material absorbing in at least one spectral light range visible to the human eye outside the transmission spectral range (404; 405; 406) or/and at least one dye or/and the metallic nanoparticles are applied to a primary product of the projection screen (104; 205).

25. Method according to claim 24, **characterized in that** the nanoparticles (106) are produced by means of at least one physical vacuum deposition method.

26. Method according to claim 24 or 25, **characterized in that** the nanoparticles are produced by means of a print procedure.

27. Method according to one of claims 24 to 26, **characterized in that** the nanoparticles are produced by means of electron beam lithography.

28. Method according to one of claims 24 to 27, **characterized in that** the dye or/and the nanoparticles (106) are imbedded in a matrix, especially in a substrate material of the projection screen (104; 205).

29. Method according to one of claims 24 to 28, **characterized in that** the matrix is applied to a primary product of the projection screen (104; 205) by means of spraying, coating with a doctor knife, painting, a sol-gel procedure and/or vapor coating.

30. Method according to one of claims 24 to 29, **characterized in that** at least one dye is imbedded in the matrix by means of co-vaporizing dye and matrix.

31. Use of a rear projection device according to one of claims 1 to 19 as a display element in an environment illuminated with daylight or/and artificial light.

## Revendications

1. Dispositif de rétroprojection pour la représentation au moins d'images statiques, comprenant au moins un écran de projection (104 ; 205) et au moins une source lumineuse (101 ; 201) ayant un domaine spectral d'émission (410 ; 411 ; 412), qui est prévue pour la rétroprojection sur l'écran de projection (104 ; 205) qui, au moins à l'extérieur d'au moins un domaine spectral de transmission (404 ; 405 ; 406) à bande spectrale étroite, est réglé à absorption spectrale sélective pour la lumière ambiante, **caractérisé en ce que** l'écran de projection (104 ; 205) comprend des nanoparticules métalliques (106) absorbantes dans au moins un domaine spectral de lumière visible par l'oeil humain, sélectionnées à cet effet, sachant que l'écran de projection (104 ; 205) permet la transmission de lumière utile à l'intérieur du domaine spectral de transmission (404 ; 405 ; 406).

2. Dispositif de rétroprojection selon la revendication 1, **caractérisé en ce que** la taille des nanoparticules métalliques est dimensionnée de telle sorte que, sur les nanoparticules métalliques, des plasmons de surface peuvent être excités à l'intérieur du domaine spectral de lumière visible par l'oeil humain.

3. Dispositif de rétroprojection selon la revendication 1 ou 2, **caractérisé en ce que** les nanoparticules métalliques fournissent au moins un domaine spectral absorbant entre deux couleurs primaires de la lumière utile.

4. Dispositif de rétroprojection selon l'une des revendications précédentes, **caractérisé en ce que** les nanoparticules métalliques (106) présentent un diamètre moyen entre 100 nm et 200 nm, de préférence entre 60 et 100 nm, et d'une manière particulièrement préférée entre 5 et 60 nm.

5. Dispositif de rétroprojection selon l'une des revendications précédentes, **caractérisé en ce que** les nanoparticules métalliques (106) présentent respectivement une forme anisotrope et sont orientées dans une direction préférentielle par rapport à l'écran de projection (104 ; 205).

6. Dispositif de rétroprojection selon l'une des revendications précédentes, **caractérisé en ce que** le domaine spectral d'émission (410 ; 411 ; 412) se situe au moins en partie à l'intérieur du domaine spectral de transmission (404 ; 405 ; 406).

7. Dispositif de rétroprojection selon l'une des revendications précédentes, **caractérisé en ce que** le domaine spectral de transmission (404 ; 405 ; 406) est formé par au moins trois domaines partiels à bande étroite, notamment chacun dans le domaine d'une couleur primaire (305 ; 306 ; 307) du spectre lumineux visible par l'oeil humain.

8. Dispositif de rétroprojection selon l'une des revendications précédentes, **caractérisé en ce qu'**il est prévu comme source lumineuse (101 ; 201) au moins un laser et/ou une DEL, notamment dans le domaine spectral d'une couleur primaire (305 ; 306 ; 307).

9. Dispositif de rétroprojection selon l'une des revendications précédentes, **caractérisé en ce qu'**il est prévu comme source lumineuse (101 ; 201) une source lumineuse à large bande spectrale en association avec une décomposition de domaine spectral, notamment pour fournir au moins un domaine spectral d'une couleur primaire (305 ; 306 ; 307).

10. Dispositif de rétroprojection selon l'une des revendications précédentes, **caractérisé en ce que** le domaine spectral d'émission (410 ; 411 ; 412) de la source lumineuse (101 ; 201) comprend les domaines spectraux d'au moins trois couleurs primaires (305 ; 306 ; 307).

11. Dispositif de rétroprojection selon l'une des revendications précédentes, **caractérisé en ce que** l'écran de projection (104 ; 205) comprend au moins un colorant et/ou des pigments colorés et/ou au moins un matériau inorganique qui sont absorbants dans au moins un domaine spectral de lumière visible par l'oeil humain.

12. Dispositif de rétroprojection selon l'une des revendications précédentes, **caractérisé en ce que** l'écran de projection (104 ; 205) est absorbant au moins dans un premier domaine spectral (302) entre 447 nm et 532 nm et dans un deuxième domaine spectral (304) entre 532 nm et 629 nm, ainsi que notamment dans le domaine spectral ultraviolet (309) et/ou dans le domaine spectral infrarouge (308).

13. Dispositif de rétroprojection selon l'une des revendications précédentes, **caractérisé en ce que** l'écran de projection (104 ; 205) comprend une matrice pour incorporer au moins une substance et/ou un colorant et/ou des nanoparticules métalliques (106) qui sont absorbants dans au moins un domaine spectral de lumière visible par l'oeil humain.

14. Dispositif de rétroprojection selon l'une des revendications précédentes, **caractérisé en ce que** l'écran de projection (104 ; 205) comprend un système de couches d'interférences comprenant au moins une couche, pour agir sur le domaine spectral de transmission.

15. Dispositif de rétroprojection selon l'une des revendications précédentes, **caractérisé en ce que** l'écran de projection (104 ; 205) comprend au moins un élément de dispersion (209).

16. Dispositif de rétroprojection selon l'une des revendications précédentes, **caractérisé en ce que** l'écran de projection (104 ; 205) comprend un traitement antireflet sur un côté avant.

17. Dispositif de rétroprojection selon l'une des revendications précédentes, **caractérisé en ce que** l'écran de projection (104 ; 205) comprend un revêtement antistatique.

18. Dispositif de rétroprojection selon l'une des revendications précédentes, **caractérisé en ce que** l'écran de projection (104 ; 205) comprend un revêtement réfléchissant les rayons infrarouges.

19. Dispositif de rétroprojection selon l'une des revendications précédentes, **caractérisé en ce que** l'écran de projection (104 ; 205) comprend une topographie de surface réduisant les taches.

20. Écran de projection d'un dispositif de rétroprojection selon l'une des revendications 1 à 19.

21. Procédé pour la représentation au moins d'images statiques, sachant qu'un écran de projection (104 ; 205) est, pour la rétroprojection, éclairé par une source lumineuse (101 ; 201) ayant un domaine spectral d'émission (410 ; 411 ; 412) visible par l'oeil humain, sachant que la lumière utile est, dans un domaine spectral de transmission (404 ; 405 ; 406) qui est formé par au moins un domaine partiel à bande étroite du spectre lumineux visible, transmise de manière spectralement sélective par l'écran de projection (104 ; 205), et que la lumière ambiante visible est, au moins à l'extérieur du domaine spectral de transmission (404 ; 405 ; 406), absorbée au moins quasiment totalement par l'écran de projection (104 ; 205), **caractérisé en ce que** des nanoparticules métalliques (106) sélectionnées à cet effet absorbent la lumière ambiante dans au moins un domaine spectral de lumière visible par l'oeil humain.

22. Procédé selon la revendication 21, **caractérisé en ce qu'**au moins une image en couleurs statique et/ou en mouvement est rétroprojetée sur l'écran de projection (104 ; 205) avec au moins trois couleurs primaires (305 ; 306 ; 307), notamment par respectivement au moins un laser et/ou une DEL.

23. Procédé selon la revendication 21 ou 22, **caractérisé en ce que**, au moyen de nanoparticules métalliques qui présentent une forme anisotrope et qui sont orientées dans une direction préférentielle par rapport à l'écran de projection (104 ; 205), on obtient une absorption et/ou une transmission en fonction de la polarisation, notamment dans le domaine d'au moins une couleur primaire (305 ; 306 ; 307).

24. Procédé de fabrication d'un écran de projection (104 ; 205) d'un dispositif de rétroprojection selon au moins une des revendications 1 à 19, sachant qu'au moins une substance absorbante dans au moins un domaine spectral de lumière visible par l'oeil humain à l'extérieur du domaine spectral de transmission (404 ; 405 ; 406) et/ou au moins un colorant et/ou les nanoparticules métalliques sont appliqués sur un avant-produit de l'écran de projection (104 ; 205).

25. Procédé selon la revendication 24, **caractérisé en ce que** les nanoparticules (106) sont fabriquées au moyen d'un procédé physique de déposition sous vide.

26. Procédé selon la revendication 24 ou 25, **caractérisé en ce que** les nanoparticules sont fabriquées au moyen d'un procédé d'impression.

27. Procédé selon l'une des revendications 24 à 26, **caractérisé en ce que** les nanoparticules sont fabriquées par lithographie par faisceau électronique.

28. Procédé selon l'une des revendications 24 à 27, **caractérisé en ce que** le colorant et/ou les nanoparticules (106) sont incorporés dans une matrice, notamment dans un matériau de substrat de l'écran de projection (104 ; 205).

29. Procédé selon l'une des revendications 24 à 28, **caractérisé en ce que** la matrice est appliquée sur un avant-produit de l'écran de projection (104 ; 205) par pulvérisation, au racloir, au pinceau, par un procédé sol-gel et/ou par dépôt en phase vapeur.

30. Procédé selon l'une des revendications 24 à 29, **caractérisé en ce qu'**au moins un colorant est incorporé dans la matrice par co-vaporisation du colorant et de la matrice.

31. Utilisation d'un dispositif de rétroprojection selon l'une des revendications 1 à 19 comme élément d'affichage dans un environnement éclairé par la lumière du jour et/ou par de la lumière artificielle.
